# EUROPÄISCHE PATENTSCHRIFT

(11) **EP 0 869 222 B1**
(45) Veröffentlichungstag und Bekanntmachung des Hinweises auf die Patenterteilung: **04.06.2003**
(21) Anmeldenummer: 98890088.2
(22) Anmeldetag: 30.03.1998
(51) Int. Cl.: E01C 23/088, A01B 33/16

(54) **Fräsbrecherfahrzeug**
Cutter-breaker vehicle
Véhicule de fraisage-concassage

(30) Priorität: 02.04.1997 AT 19597 U
(43) Veröffentlichungstag der Anmeldung: 07.10.1998
(73) Patentinhaber: Schmid - Planungs- und VertriebsgmbH, 3343 Hollenstein/Ybbs (AT)
(72) Erfinder: Schmid, Josef, 3343 Hollenstein/Ybbs (AT)
(74) Vertreter: Müllner, Erwin, Dr.

(56) Entgegenhaltungen:
- EP-A- 0 513 479
- AT-B- 400 452
- US-A- 4 177 954
- US-A- 5 259 692

## Beschreibung

Die Erfindung betrifft ein Fräsbrecherfahrzeug, insbesondere für die Forst- und Güterwegsanierung bzw. zur landwirtschaftlichen Nutzbarmachung von steinigen Böden, mit einer mit Fräsmeißeln bestückten, rotierend angetriebenen Walze, die zwischen den Fräsmeißeln auf ihrer Mantelfläche versetzte Brecherelemente aufweist, sowie mit mindestens einer der Walze stationär gegenüberliegenden Brecherleiste, die zusammen mit dem gegenüberliegenden Walzenbereich eine Brecherkammer bildet.

Aus der AT 400 452 B ist ein Fräsbrecher bekannt, der im Straßen- oder Wegebau eingesetzt wird. Mit Hilfe dieses Fräsbrechers wird die ursprüngliche Straßendecke bzw. die befahrene Oberfläche durch die mit Fräsmeißeln bestückte Fräsbrecherwalze abgefräst, die abgefrästen Bruchstücke werden zerkleinert und als Teil des neuen Straßen- oder Wegbelages wieder aufgebracht. Das Zerkleinern erfolgt im Zusammenwirken der Fräsbrecherwalze mit einer Brecherleiste. Der bekannte Fräsbrecher ist für den Straßenbau, insbesondere bei gleichmäßigem Anfall von Bruchstücken und etwa gleicher Bruchstückgröße, gut geeignet. Im Einsatz im Forstwesen oder in der Landwirtschaft liegen nicht die idealen Bedingungen, wie im Straßenbau vor. Vielmehr müssen etwa bei der Errichtung oder Sanierung von Forstwegen Felsstücke und Felsrippen von völlig unterschiedlicher Größe abgearbeitet werden. Oft werden auch große Steine aus dem Boden gerissen. Dies gilt auch bei Einsatz eines Fräsbrechers in der Landwirtschaft. Es gibt Lagen und Bodenbeschaffenheiten, die eine landwirtschaftliche Nutzung nicht gestatten. In vielen Fällen gelingt es aber, nach Entfernung von Steinen und Felsen oder nach Zerkleinerung derselben, eine Bepflanzung erfolgreich durchzuführen. Für die Zerkleinerung der Felsstücke und Steine auf einer Bodenfläche kann ein Fräsbrecher herangezogen werden.

Die Erfindung zielt darauf ab, ein Fräsbrecherfahrzeug für den Einsatz im Forst- und Güterwegbau bzw. für die Sanierung dieser Wege sowie für die landwirtschaftliche Nutzbarmachung von steinigem bzw. felsigem Boden zu schaffen, das speziell für unterschiedlich große Bruchstücke besonders gut geeignet ist und die Möglichkeit der raschen Anpassung an die Bodenbeschaffenheit einräumt. Dies wird erfindungsgemäß dadurch erreicht, daß mehrere Brecherleisten, in Drehrichtung der Walze gesehen, dem abwärts laufenden Abschnitt der Walze gegenüberliegend, auf jeweils einem separaten bzw. einem gemeinsamen Träger vorgesehen sind. Im Gegensatz zur bekannten Ausführung befinden sich mehrere vorzugsweise gestaffelt in verschiedenen Abständen zur Walze angeordnete Brecherleisten auf der der Vorschubrichtung bzw. Fahrtrichtung des Fräsbrecherfahrzeuges entgegengesetzten Walzenseite, also im Bereich der abwärts gerichteten Drehung der Walze. Dadurch unterstützt die Schwerkraft den Brechvorgang. Steine und Felsstücke fallen nichtmehr unzerkleinert zurück auf den Boden, sondern werden zuverlässig mehrfach zerschlagen. Dadurch liefert das Fräsbrecherfahrzeug einen gleichmäßigen Ausstoß von Material in übereinstimmender Kerngröße.

Es ist zweckmäßig, wenn der bzw. die Träger zusammen mit dem gegenüberliegenden Abschnitt der Walze eine bzw. mehrere hintereinander angeordnete Brechkammern begrenzen, die nach unten jeweils mit einer Brecherleiste (7) enden. Die zu bearbeitenden Bruchstücke werden über den Scheitel der Walze hinweg nach unten in die Brechkammer gebracht, in der mehrere Brechleisten der Walze gegenüberstehen. Die Baugruppe kann in mehrere aufeinanderfolgende Brechkammern unterteilt sein, die jeweils mit einer Brechleiste enden.

Das Brecherwerk kann den jeweiligen Anforderungen angepaßt werden, wenn der bzw. die Träger für die Brecherleisten hydraulisch schwenkbar angeordnet sind und durch Verschwenken der Abstand zwischen Brecherleisten und Walze bzw. deren Fräsmeißeln sowie den walzenseitigen Brecherelementen einstellbar ist. Wird also etwa ein Feld mit dem Fräsbrecher befahren um es urbar zu machen, dann kann der Fahrer je nach der Fels- oder Steingröße der unmittelbar vor dem Fräsbrecherfahrzeug liegenden Brocken die Position der Brecherleisten und somit den Spalt zur Walze individuell einstellen. Bei einer konkreten Ausführungsform wurde mit einem Walzendurchmesser von etwa 80 cm bei einer Walzenumdrehungszahl von 600 Upm gearbeitet.

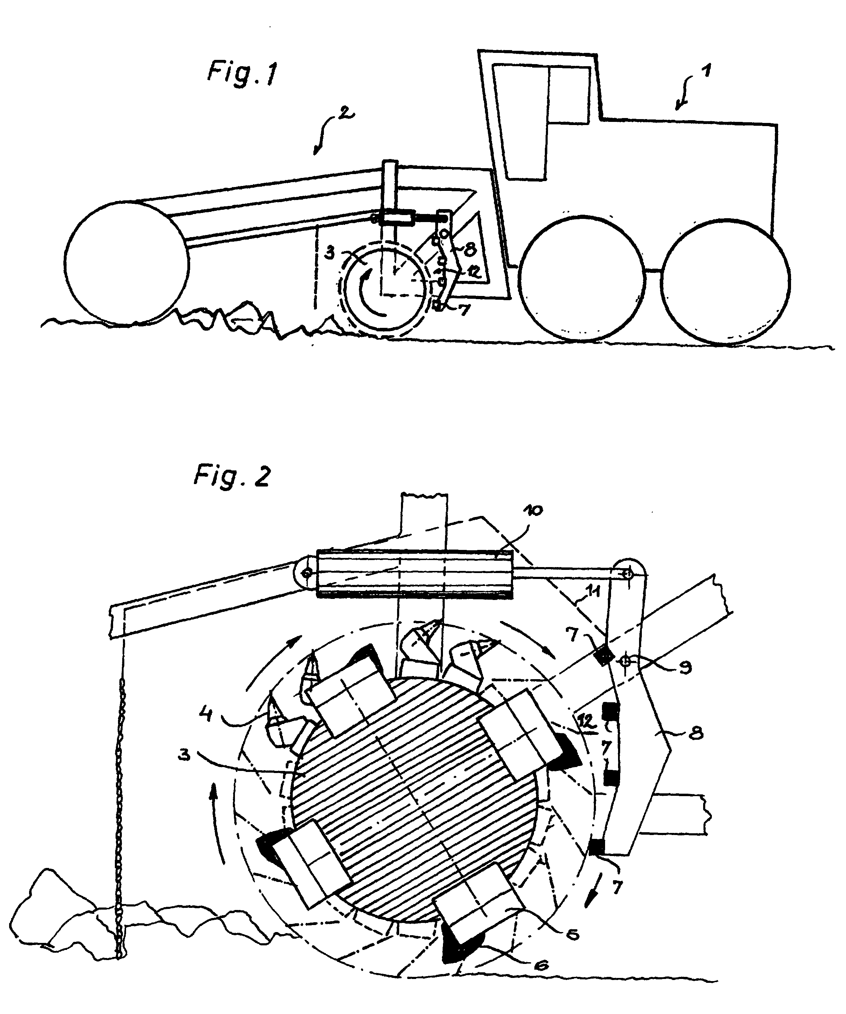

Ein Ausführungsbeispiel ist in den Zeichnungen dargestellt. Fig. 1 zeigt eine Ansicht eines Fräsbrecherfahrzeuges in schematischer Darstellung und Fig. 2 die Fräsbrecherwalze gemäß Fig. 1 im Detail.

Ein Trägerfahrzeug 1 steht gemäß Fig. 1 mit einem Fräsbrecher 2 in lösbarer Verbindung. Das Trägerfahrzeug 1 kann auch andere Bearbeitungsmodule aufnehmen und antreiben. Der Fräsbrecher 2 umfaßt eine Walze 3, die über eine Zapfwelle vom Trägerfahrzeug 1 aus angetrieben wird. Gemäß Fig. 2 trägt die Walze 3 auf ihrer Mantelfläche gleichmäßig verteilt und in axialer Richtung der Walze 3 versetzt zueinander eine Vielzahl von Fräsmeißeln 4 mit drehbaren Hartmetallkronen. In den Zwischenräumen zwischen den Fräsmeißeln 4 sind Brecherelemente 5 auf der Mantelfläche der Walze 3 angeordnet. Diese quaderförmigen Elemente tragen an der Einsatzkante eine Hartmetallauflage 6.

Der Walze 3 liegen auf der der Fahrtrichtung entgegengesetzten Seite, also im abwärtslaufenden Abschnitt der rotierenden Walze, Brecherleisten 7 gegenüber. Diese sind auf einem Träger 8 auswechselbar angeordnet. Der Träger 8 ist schwenkbar gelagert (Lager 9) und wird von einem Hydraulikzylinder 10 betätigt. Auf diese Weise kann der Abstand (Spalt) zwischen den Fräsmeißeln 4 bzw. den Brecherelementen 5 und den Brecherleisten 7 verändert werden.

Eine Wand 11 sowie der Träger 8 einerseits und die Walze 3 anderseits begrenzen eine Brecherkammer 12, deren Größe somit im Arbeitsbereich der Materialgröße angepaßt werden kann.

## Patentansprüche

1. Fräsbrecherfahrzeug zur Bodenbearbeitung, insbesondere für die Forst- und Güterwegsanierung bzw. zur landwirtschaftlichen Nutzbarmachung von steinigen Böden, mit einer mit Fräsmeißeln (4) bestückten, rotierend angetriebenen Walze (3), die zwischen den Fräsmeißeln auf ihrer Mantelfläche versetzte Brecherelemente (5) aufweist, sowie mit mindestens einer der Walze stationär gegenüberliegenden Brecherleiste (7), die zusammen mit dem gegenüberliegenden Walzenbereich eine Brecherkammer bildet, **dadurch gekennzeichnet, daß** mehrere Brecherleisten (7), in Drehrichtung der Walze (3) gesehen, ausschließlich dem abwärts laufenden Abschnitt der Walze (3) gegenüberliegend, auf jeweils einem separaten bzw. einem gemeinsamen Träger (8) vorgesehen und der bzw. die Träger (8) für die Brecherleisten (7) hydraulisch schwenkbar angeordnet sind und durch Verschwenken der Abstand zwischen Brecherleisten (7) und Walze (3) bzw. deren Fräsmeißeln (4) sowie den walzenseitigen Brecherelementen (5) einstellbar ist.

2. Fräsbrecherfahrzeug zur Bodenbearbeitung nach Anspruch 1, **dadurch gekennzeichnet, daß** der bzw. die Träger (8) zusammen mit dem gegenüberliegenden Abschnitt der Walze (3) eine bzw. mehrere hintereinander angeordnete Brechkammern (12) begrenzen, die nach unten jeweils mit einer Brecherleiste (7) enden.

## Claims

1. Travelling rock crusher for soil cultivation, in particular for forest and freight path clearance or for agricultural exploitation of rocky ground, comprising a roller (3) driven to rotate and equipped with chisels (4), the roller (3) comprising crusher elements (5) offset on its surface between the chisels, and comprising at least one crusher strip (7) stationarily opposing the roller, the crusher strip (7) forming a crusher chamber together with the opposing roller region, **characterised in that** a plurality of crusher strips (7), viewed in the direction of rotation of the roller (3), exclusively opposing the portion of the roller (3) running downwards, are provided on a respective separate or a common carrier (8) and the carrier(s) (8) for the crusher strips (7) are arranged to be hydraulically pivotable and the spacing between the crusher strips (7) and roller (3) or chisels (4) and the roller-side crusher elements (5) can be adjusted by pivoting.

2. Travelling rock crusher for soil cultivation according to claim 1, **characterised in that** the carrier(s) (8) together with the opposing portion of the roller (3) define one or more crusher chambers (12) arranged one behind the other, each terminating with a crusher strip (7) at the bottom.

## Revendications

1. Véhicule de fraisage-concassage pour le travail du sol, en particulier pour la rénovation des chemins de forêt et de marchandise ou, respectivement, pour rendre exploitables à des fins d'agriculture des terrains caillouteux, présentant un rouleau (3) muni de burins de fraisage (4) et entraîné en rotation, le rouleau présentant des éléments de concassage (5) disposés de façon décalée sur sa surface extérieure entre les burins de fraisage, ainsi qu'au moins une barre de concassage (7) disposée stationnaire en face du rouleau pour constituer, avec la zone du rouleau lui faisant face, une chambre de concassage, **caractérisé en ce que** plusieurs barres de concassage (7), sont prévues, sur, respectivement, un support (8) séparé ou commun disposé, vu dans la direction de rotation du rouleau (3), exclusivement en face de la section du rouleau (3) se déplaçant vers le bas, et le ou les supports (8) pour les barres de concassage (7) sont agencés pour pouvoir basculer hydrauliquement et permettent de régler, par basculement, la distance entre les barres de concassage (7) et le rouleau (3) ou, respectivement, les burins de fraisage (4) du rouleau ainsi que les éléments de concassage (5) du rouleau.

2. Véhicule de fraisage-concassage pour le travail du sol selon la revendication 1, **caractérisé en ce que** le ou les supports (8) délimite(nt), avec la section du rouleau (3) lui/leur faisant face, une ou plusieurs chambres de concassage (12) disposées les unes derrière les autres, qui se terminent chacune vers le bas avec une barre de concassage (7)
